# EUROPEAN PATENT APPLICATION

(11) **EP 3 533 835 A1**
(43) Date of publication of application: **04.09.2019**
(21) Application number: 18159177.7
(22) Date of filing: 28.02.2018
(51) Int. Cl.: C08L 75/04, C08K 3/34, C08K 3/013, C08K 3/30

(54) **ONE-COMPONENT WATER-BORNE POLYURETHANE COATING COMPOSITION AND PREPARATION METHOD THEREOF**

(71) Applicant: Covestro Deutschland AG, 51373 Leverkusen (DE)
(72) Inventor: The designation of the inventor has not yet been filed
(74) Representative: Levpat

(57) **Abstract**

The present invention provides a one-component water-borne polyurethane coating composition, which comprises water-borne polyurethane resin, inorganic particles, optional acrylate resin and optional adjuvants, wherein the solids content of the water-borne polyurethane resin is 10-30 pbw, based on that the total amount of the coating composition being 100 pbw. The present invention also provides a method for preparing the polyurethane coating composition and application thereof. The one-component water-borne polyurethane coating composition provided by the present invention is free of solvent odor, safe and environmentally friendly in use. The coating formed with the one-component water-borne polyurethane coating composition provide by the present invention possesses one or more excellent properties among excellent mechanical properties, excellent water, acid and base resistance, extremely low water absorption and weather fastness.

## Description

### Technical Field

The present invention belongs to the coating field. Specifically, it relates to a one-component water-borne polyurethane coating composition, its preparation method and application.

### Background Art

The waterproof coating compositions currently used on the market mainly include solvent-borne waterproof coatings and water-borne waterproof coatings.

Solvent-borne waterproof coatings mainly include solvent-borne polyurethane waterproofing coatings, solvent-borne acrylate waterproofing coatings, asphalt waterproofing coatings, rubber waterproof coatings and silicone rubber waterproof coatings, and the like. What these coatings have in common is that they use organic solvents as carriers and have advantages of high strength and elongation, as well as good anti-permeability. However, due to the organic solvents incorporated in these coatings, they will cause pollution to environment and have adverse effect on the health of applicators. Meanwhile, as solvent-borne coatings, they have higher standards towards basic drying degree, which is especially disadvantageous to waterproof application in a humid environment. The one-component moisture-curing PU coating as disclosed in CN103965765B is particularly demanding for site application conditions.

In recent years, efforts have been devoted to develop water-based coating compositions to reduce use of organic solvents as much as possible. The water-based waterproof coatings currently available on the market mainly include acrylic emulsion waterproof coatings, water-borne polyurethane waterproofing coatings, emulsified chloroprene rubber waterproof coatings and JS polymer cement waterproof coatings, and the like. However, compared to solvent-borne waterproof coatings, water-based waterproof coatings are usually difficult to meet the requirements for high performance in mechanical properties, acid and base resistance.

Water-borne polyurethane waterproofing coatings are excellent in properties, moderate in price, thus occupying an important position in the field of waterproof coatings. Water-borne polyurethane waterproofing coatings are classified into two-component polyurethane waterproofing coatings and one-component polyurethane waterproofing coatings. During application, the two components of the two-component polyurethane waterproofing coatings have to be weighed and formulated strictly following prescribed ratios, thus there are strict requiremnts for site application conditions. In order to overcome the deficiencies of the two-component polyurethane waterproofing coatings, one-component polyurethane waterproofing coatings have been developed in the industry. Current one-component polyurethane waterproofing coatings comprise polyurethane prepolymer and water is used as cross-linker during use, the amount thereof is not easy to control and thus increases instability of coatings, leading to occurance of blisters, pinholes and so on during application.

Therefore, there is a need in the field for a novel coating which is not only capable of avoiding environmental problems caused by the solvent-borne waterproof coatings, but also possesses improved mechanical properties and chemical resistance.

### Summary of the Invention

An object of the present invention is to provide a novel coating composition, which is not only capable of avoiding environmental problems caused by the solvent-borne waterproof coating, but also the coatings prepared thereof are conferred with one or more excellent properties among improved mechanical properties, chemical resistance, low water absorption, weather fastness and the like.

The object of the present invention is achieved through the following technical solutions.

In one aspect, the present invention has provided a one-component water-borne polyurethane coating composition, which comprises a water-borne polyurethane resin, inorganic particles, an optional acrylate resin and an optional adjuvant, wherein the solids content of the water-borne polyurethane resin is 10-30 pbw, based on that the total amount of the coating composition being 100 pbw.

In another aspect, the present invention has provided a method for preparing the coating composition, comprising the following steps:
A) mixing inorganic particles and an optional adjuvant in water homogeneously, and
B) adding a water-borne polyurethane resin, an optional acrylate resin and an optional adjuvant to the mixture obtained in step A) and mixing homogeneously.

In yet another aspect, the present invention has provided a coating method comprising applying the coating composition to a substrate.

In still another aspect, the present invention has provided use of the coating composition for forming a coating in the field of building waterproofing, such as roof waterproofing, kitchen and bathroom waterproofing and swimming pool waterproofing.

In still another aspect, the present invention has provided a coated product comprising a substrate and a coating formed by applying the coating composition onto the substrate.

The one-component water-borne polyurethane coating composition provided by the present invention is a waterproof coating composition, which meets the requirements for coating composition in Architecture Industry and is free of solvent odor, safe and environmentally friendly in use. The coating formed with the one-component water-borne polyurethane coating composition provided by the present invention possesses one or more excellent properties among excellent mechanical properties, excellent water, acid and base resistance, extremely low water absorption and weather fastness and the like.

### Detailed Description of the Invention

Specific embodiments of the present invention are described hereafter.

In one aspect, the present invention has provided a one-component water-borne polyurethane coating composition, which comprises a water-borne polyurethane resin, inorganic particles, an optional acrylate resin and an optional adjuvant, wherein the solids content of the water-borne polyurethane resin is 10-30 pbw, based on that the total amount of the coating composition being 100 pbw.

### Water-borne Polyurethane Resin

The water-borne polyurethane resin useful in the present invention includes, but not limited to, one or more selected from: polyether polyurethane resin based on aliphatic isocyanate and polyether polyol, polycarbonate polyurethane resin based on aliphatic isocyanate and polycarbonate polyol, and polyester polyurethane resin.

Most preferably, the water-borne polyurethane resin is polyether polyurethane resin based on aliphatic isocyanate and polyether polyol.

The polyether polyurethane resin based on aliphatic isocyanate and polyether polyol useful in the present invention is known in the art.

In some embodiments, the polyether polyurethane resin based on aliphatic isocyanate and polyether polyol is prepared by at least two poly(tetramethylene glycol) polyether diols with different average molar masses and at least two different polyisocyanate components.

The at least two different polyisocyanates may be those with an isocyanate functionality of no less than 2. The polyisocyanate with a functionality of no less than 2 may be one or more selected from: 1,4-butylene diisocyanate, 1,6-hexamethylene diisocyanate (HDI), isophorone diisocyanate (IPDI), 2,2,4-trimethyl-hexamethylene diisocyanate, 2,4,4-trimethyl-hexamethylene diisocyanate, isomeric bis(4,4'-isocyanatocyclohexyl)methanes, 1,4-cyclohexylene diisocyanate and alkyl-2,6-diisocyanatohexanoate with C₁-C₈ alkyl groups.

It is also possible to use some of modified polyisocyanates having a functionality of no less than 2 with uretdione, isocyanurate, urethane, allophanate, biuret, iminooxadiazinedione or oxadiazinetrione structure and mixtures thereof, as the polyisocyanate with a functionality of no less than 2.

The at least two different polyisocyanates are further preferably those with exclusively aliphatically or cycloaliphatically bonded isocyanate groups or mixtures thereof and the average NCO functionality of the mixture is 2-4, particularly preferably 2-2.6, more particularly preferably 2-2.4 and most particularly preferably 2. Most preferably used diisocyanate is one or more selected from: hexamethylene diisocyanate, isophorone diisocyanate and isomeric bis(4,4'-isocyanatocyclohexyl)methanes.

The poly(tetramethylene glycol) polyether diols with the structure (HO-(CH₂-CH₂-CH₂-CH₂-O)ₓ-H) are preferred, wherein relevant diol precursors has a number-average molecular weight Mn of 400-8000 g/mol, preferably 600-3000 g/mol, and diols with lower molar mass has a number-average molecular weight Mn which is 10-80%, preferably 30-70% of the number-average molecular weight Mn of diols with higher molar mass.

In addition to the poly(tetramethylene glycol) polyether diols with the structure (HO-(CH₂-CH₂-CH₂-CH₂-O)ₓ-H), the polyether polyols may comprise additional polymeric polyols, preferably with an amount of 0-20 wt.%, particularly preferably of 0-10 wt.%, most particularly preferably of 0-5 wt.% based on the total amount of the polyether polyol components. They may be selected from polyester polyols, polyacrylate polyols, polyurethane polyols, polycarbonate polyols, polyether polyols, polyester polyacrylate polyols, polyurethane polyacrylate polyols, polyurethane polyester polyols, polyurethane polyether polyols, polyurethane polycarbonate polyols and polyester polycarbonate polyols which are known per se in polyurethane coating technology. In addition, they may be used alone or in any mixtures with one another as the polyether polyol component. Preferably only poly(tetramethylene glycol) polyether diols are used as the polyether polyol component.

The polyether polyurethane resin based on aliphatic isocyanate and polyether polyol may be commercially available, for example the water-borne polyurethane dispersion Bayhydrol UH 2880 from the company Covestro, the primary performance indexes thereof are as follows: solids content: 50%, viscosity <2500mPa·s (23°C, DIN EN ISO 3219/A.3), tensile strength: 20MPa, elongation at break: 1500% and 100% modulus: 2MPa.

The polycarbonate polyurethane resin based on aliphatic isocyanate and polycarbonate polyol and the polyester polyurethane resin are also known in the art and commercially available.

The polyester polyurethane may be obtained by reacting dicarboxylic acid with excessive polyol, giving hydroxyl-containing polyester as the hydroxyl group component; then reacting the polyester with diisocyanate or polyisocyanate. Examples of the dicarboxylic acid used include adipic acid, phthalic anhydride, m-phthalic acid, terephthalic acid and so on. Examples of the polyol used include trimethylolpropane, neopentyl glycol, diethylene glycol, 1,3-butanediol and so on. The polyester polyurethane used in the present invention is preferably the polyester polyurethane resin based on aliphatic isocyanate and polyester polyol.

For example, the polyester polyurethane may be Impranil® DL 1537 (aqueous dispersion of polyester polyurethane resin based on aliphatic isocyanate and polyester polyol, solids content: 60 wt.%) available from the company Covestro, and Bayhydrol UH XP 2592(aqueous dispersion with a solids content of 45 wt.%) available from the company Covestro. The polycarbonate polyurethane resin based on aliphatic isocyanate and polycarbonate polyol may be Impranil®DLU (aqueous dispersion with a solids content of 60 wt.%) available from the company Covestro, and Bayhydrol® UH 2606 (aqueous dispersion with a solids content of 35 wt.%) available from the company Covestro.

The solids content of the water-borne polyurethane resin may be 10-25 pbw, preferably 10-22 pbw, more preferably 10-21 pbw, based on that the total amount of the coating composition being 100 pbw.

The water-borne polyurethane resin may be added to the coating composition of the present invention for example as a dispersion. When added as a dispersion, the solids content of the water-borne polyurethane resin refers to the amount of the water-borne polyurethane resin per se.

Although not bound to any theory, it is believed that the water-borne coating composition of the present invention is based on the above polyurethane resin, which is capable of forming attached film and controlling microphase morphology by controlling relative amount of soft segments to hard segments in the polymer chain. Due to these characteristics, the coating composition of the present invention may be applied to many surface coating applications in which mechanical properties are particularly critical, including high wear resistance, excellent tenacity and elastomeric properties, as well as high extensibility at low temperatures.

### Acrylate Resin

In addition to the above water-borne polyurethane resin, the coating composition of the present invention may further comprise an acrylate resin. The acrylate resin may be selected from styrene acrylate copolymer resin and self-crosslinkable hydroxyl-containing acrylic resin.

The acrylate resin is known in the art and commercially available. For example, the styrene acrylate copolymer resin may be RS-9169M (aqueous dispersion with a solids content of 53 wt.%) available from the company BATF, and the self-crosslinkable hydroxyl-containing acrylic resin may be Bayhydrol® A 2846 XP (aqueous dispersion with a solids content of 40 wt.%) available from the company Covestro.

The ratio by weight between the solids content of the water-borne polyurethane resin and the solids content of the acrylate resin may be greater than 2: 1, preferably no smaller than 5: 1, most preferably no smaller than 9: 1.

The acrylate resin may be added to the coating composition of the present invention for example as an emulsion. When added as emulsion, the solids content of the acrylate resin refers to the amount of the acrylate resin per se.

Preferably, the coating composition of the present invention comprises a combination of polyether polyurethane resin based on aliphatic isocyanate and polyether polyol and self-crosslinkable hydroxyl-containing acrylic resin.

Preferably, the polyether polyurethane resin based on aliphatic isocyanate and polyether polyol may be present in an amount of 10-30 pbw and the self-crosslinkable hydroxyl-containing acrylic resin may be present in an amount of 2.5-7.5 pbw, more preferably 1-3 pbw, most preferably 1-2 pbw in the coating composition, based on that the total amount of the coating composition of the present invention being 100 pbw.

### Inorganic Particles

The inorganic particles useful in the present invention may be one or more selected from: titanium dioxide, barium sulfate, talc powder and kaolin particles.

The inorganic particles may have a particle diameter preferably of 0.1-50 µm, further preferably of 0.1-30 µm, more preferably of 0.1-20 µm.

Preferably, the inorganic particles of the present invention are titanium dioxide, barium sulfate particles or combination thereof. Particularly preferably, as the inorganic particles in the coating composition of the present invention, a combination of titanium dioxide particles and barium sulfate particles is used. A combination of rutile titanium dioxide particles and barium sulfate particles is particularly preferably used.

In some preferred embodiments, the combination of rutile titanium dioxide particles with a particle size of 0.1-0.4 µm and barium sulfate particles with a particle size of 800-4000 mesh is used.

In some more preferred embodiments, the combination of rutile titanium dioxide particles with a particle size of 0.2-0.4 µm and barium sulfate particles with a particle size of 1250-4000 mesh is used.

The inorganic particles useful in the present invention are known in the art and commercially available. For example, the titanium dioxide may be rutile titanium dioxide R706 available from the company Dupont; the barium sulfate may be the product BaS0₄ (800-4000 mesh) available from Shanghai Yuejiang Titanium Chemical Manufacturer Co., Ltd.; the talc powder may be that available from Shanghai Yuejiang Titanium Chemical Manufacturer Co., Ltd., the main component thereof is hydrous magnesium silicate; the kaolin may be that available from Shanghai Yuejiang Titanium Chemical Manufacturer Co., Ltd., the main components are aluminium oxide and silica.

The inorganic particles may be used in an amount of 1-80 pbw, preferably of 20-60 pbw, more preferably of 30-50 pbw, wherein preferably, the titanium dioxide is used in an amount of 1-40 pbw and the barium sulfate is used in an amount of 0-40 pbw, further preferably, the titanium dioxide is used in an amount of 10-30 pbw and the barium sulfate is used in an amount of 10-30 pbw, particularly preferably, the titanium dioxide is used in an amount of 20-30 pbw and the barium sulfate is used in an amount of 20-30 pbw, based on that the total amount of the coating composition of the present invention being 100 pbw.

The volume of the inorganic particles presents 20-60%, preferably 30-50%, most preferably 35-45%, particularly preferably 40% of the total volume of the coating formed by the coating composition of the present invention (i.e., PVC).

### Optional Adjuvants

In one aspect, the coating composition of the present invention may optionally further comprise an adjuvant, for example, but not limited to, wetting and dispersing agents, defoaming agents, film-forming aids, substrate wetting and leveling agents, pH adjusting aids, rheological aidsand surfactants.

The amounts of the optional adjuvants are not limited, so long as they do not affect the properties of the coating composition of the present invention adversely. The optional adjuvants are known in the art and commercially available. For example, the defoaming agent may be 901W available from Evonik Industries AG; the pH adjusting aid may be AMP-95 available from The Dow Chemical Company; the rheological aid may be hydroxyethyl cellulose 250HBR available from the company Aqualon, US; the film-forming aid may be propanediol; the wetting and dispersing agent may be the wetting and dispersing agent BYK190 available from BYK Chemie GmbH; the substrate wetting and leveling agent may be polyether-modified siloxane with a relatively low molecular weight (for example several hundreds), such as BYK349 available from BYK Chemie GmbH.

The surfactants useful in the present invention include self-crosslinkable surfactants and non-self-crosslinkable surfactants. The surfactants include, but not limited to polysiloxane surfactants.

The polysiloxane surfactants are preferably non-self-crosslinkable.

Preferably, the polysiloxane surfactant may be one or more selected from: self-crosslinkable polyether-modified polydimethylsiloxane and non-self-crosslinkable polyether-modified polydimethylsiloxane, most preferably non-self-crosslinkable polyether-modified polydimethylsiloxane. Preferably, the self-crosslinkable polyether-modified polydimethylsiloxane is selected from those containing hydroxyl groups. Preferably, the non-self-crosslinkable polyether-modified polydimethylsiloxane is selected from those containing no hydroxyl groups.

The surfactants useful in the present invention are known in the art and commercially available, for example linear polyether-modified polydimethylsiloxane with a relatively high molecular weight. As examples, the non-self-crosslinkable polyether-modified polydimethylsiloxane may be BYK378, a commercial product available from BYK Chemie GmbH; the self-crosslinkable polyether-modified polydimethylsiloxane may be BYK3720, a commercial product available from BYK Chemie GmbH.

The surfactant may be used in an amount of 0-10 pbw, preferably of 0.1-5 pbw, particularly preferably of 0.1-3 pbw, most preferably of 0.1-1 pbw, based on that the total amount of the coating composition of the present invention being 100 pbw.

The coating composition of the present invention may further comprise water. The amount of water is not limited, so long as they do not affect the properties of the coating composition of the present invention adversely. For example, water may be present in an amount of 5-60 pbw, 10-50 pbw, 10-40 pbw, 10-30 pbw or 10-20 pbw.

In another aspect, the present invention has provided a method for preparing the one-component water-borne polyurethane coating composition of the present invention comprising the following steps:
A) mixing inorganic particles and an optional adjuvant in water homogeneously, and
B) adding a water-borne polyurethane resin, an optional acrylate resin and an optional adjuvant to the mixture obtained in step A) and mixing homogeneously.

In an embodiment, the mixing rate in step B) is lower than that in step A) in the method of the present invention.

In an embodiment, the present invention has provided a method for preparing the one-component water-borne polyurethane coating composition of the present invention comprising the following steps:
A) mixing inorganic particles and an optional adjuvant in water and stirring for 10-30 min under a preferred stirring speed of 1500-2500 r/min, and
B) adding a water-borne polyurethane resin, an optional acrylate resin and an optional adjuvant to the mixture obtained in step A) and stiring for 5-20 min under a preferred stirring speed of 600-1200 r/min.

In an embodiment, a self-crosslinkable hydroxyl-containing acrylic resin is added in step B) of the above method of the present invention.

Preferably, in the method of the present invention, the water-borne polyurethane resin is added as a water-borne polyurethane resin dispersion and the acrylate resin is added as an emulsion.

In an embodiment, the present invention has provided a method for preparing the one-component water-borne polyurethane coating composition of the present invention comprising the following steps:
A) adding titanium dioxide, barium sulfate, wetting and dispersing agent, defoaming agent, pH adjusting aid and cellulose ether in water and stirring for 10-30 min under a preferred stirring speed of 1500-2500 r/min, and
B) adding a water-borne polyurethane resin dispersion, an emulsion of self-crosslinkable hydroxyl-containing acrylic resin, a film-forming aid, a defoaming agent, a substrate wetting and dispersing agent and a surfactant to the mixture obtained in step A) and stiring for 5-20 min under a preferred stirring speed of 600-1200 r/min.

In yet another aspect, the present invention has provided a coating method comprising applying the coating composition to a substrate.

The substrate is preferably selected from artificial stones, woods, artificial woods, marbles, terrazzoes, ceramics, linoleums, metals, mineral materials, plastics, rubbers, concretes, composite sheets, papers, leathers or glass, more preferably selected from artificial stones, woods, artificial woods, marbles, terrazzoes, ceramics, metals, mineral materials or concretes, most preferably concretes.

In still another aspect, the present invention has provided use of the one-component water-borne polyurethane coating composition of the present invention for forming a coating in the field of building waterproofing, such as roof waterproofing, kitchen and bathroom waterproofing and swimming pool waterproofing.

In still another aspect, the present invention has provided a coated product comprising a substrate and a coating formed by applying the coating composition onto the substrate.

The coated products are preferably buildings, such as roofs, kitchens, bathrooms or swimming pools.

It is to be understood that all the numerical values used in the application to indicate amounts, percentages, pbws, hydroxyl values, functionalities and so on are in all cases modified by the term "about".

Now the following specific examples are referenced to describe the present invention in detail. However, it will be understood by those skilled in the art that the examples herein are only for illustrative purpose and the scope of the present invention is not limited to these.

### Examples

### Raw Materials

**Table 1 lists raw materials used in Invention Examples and Comparative Examples.**

| **Experimental Materials** | | | |
|---|---|---|---|
| Material | Function | Supplier | Chemical Ingreadients |
| DISPER BYK-190 | wetting and dispersing agent | BYK Chemie GmbH | solution of high-molecular-weight block copolymer containing group affine to pigment |
| TEGO® Airex 901 W | defoaming agent | Evonik Industries AG | polyether siloxane copolymer, containing fumed silica |
| R706 (average particle diameter: 0.26um) | pigment and filler | Dupont | titanium dioxide |
| BaSO₄ (800 mesh) | pigment and filler | Shanghai Yuejiang Titanium Chemical Manufacturer Co., Ltd. | barium sulfate |
| BaSO₄ (1250 mesh) | pigment and filler | Shanghai Yuejiang Titanium Chemical Manufacturer Co., Ltd. | barium sulfate |
| BaS0₄ (4000 mesh) | pigment and filler | Lianzhuang Technology Co., Ltd. of Guangxi | barium sulfate |
| talc powder (800 mesh) | pigment and filler | Shanghai Yuejiang Titanium Chemical Manufacturer Co., Ltd. | hydrous magnesium silicate |
| kaolin (800 mesh) | pigment and filler | Shanghai Yuejiang Titanium Chemical Manufacturer Co., Ltd. | aluminium oxide and silica |
| AMP-95 | p H adjusting aid | The Dow Chemical Company | 2-amino-2- methyl-propanol |
| 250HBR | rheological aid | Aqualon, US | hydroxyethyl cellulose |
| Bayhydrol UH 2880 | resin | Covestro | polyether polyurethane resin dispersion |
| Impranil® DL 1537 | resin | Covestro | polyester polyurethane resin dispersion |
| Impranil®DLU | resin | Covestro | polycarbonate polyurethane resin dispersion |
| Bayhydrol UH XP 2592 | resin | Covestro | polyester polyurethane resin dispersion |
| Bayhydrol® UH 2606 | resin | Covestro | polycarbonate polyurethane resin dispersion |
| propanediol | solvent | Sinopharm Chemical Reagent Co., Ltd. | propanediol |
| RS-9169M | resin | BATF | styrene/acrylate copolymer |
| Bayhydrol® A 2846 XP | resin | Covestro | dispersion of self-crosslinkable hydroxyl-containing acrylic resin |
| BYK022 | defoaming agent | BYK Chemie GmbH | mixture of defoaming polysiloxane and hydrophobic solid particles in poly diols |
| BYK349 | wetting and dispersing agent | BYK Chemie GmbH | polyether-modified siloxane |
| BYK378/3720 | surfactant | BYK Chemie GmbH | polyether-modified polydimethylsiloxane |

Sample preparation and testing methods in the Examples are as follows.

### Sample Preparation and Testing Methods

### 1. Tensile Strength and Elongation at Break

a) blade coating the prepared coating composition onto a release paper, to give a dry film thickness of 1.5 mm;
b) curring for 7 days under standard conditions (23°C±2°C, 50%±10%) at a temperature of 23°C, a humidity of 50%; turn-over is required after 4 days of curring;
c) cutting the film into a dumbbell shape; and
d) measuring elongation at break and tensile strength by a ZWICK universal material testing machine at room temperature with a tensile velocity of 500 mm/min.

### 2. National Standard and Architecture Industry Standard Values of Tensile Strength and Elongation at Break under Standard Condition, Acid Treatment, Alkali Treatment, and National Standard and Architecture Industry Standard Values of Water Absorption

**Table 1 Standard Values of Performance Index**

| | | | Polyurethane Waterproofing Coating (National Standard) GB/T 19250-2013 Type I | Polymer Emulsion Architectural Waterproof Coating (Architectural Material Industry Standard) JC/T 864-2008 Type II |
|---|---|---|---|---|
| Standard Condition (23°C, 168h) | Tensile Strength/MPa | ≥ | 2 | 1.5 |
| | Elongation at Break/% | ≥ | 500 | 300 |
| Acid Treatment (2%H₂SO₄, 168h) | Tensile Strength Retention/% | ≥ | 80-150 | 40 |
| | Elongation at Break/% | ≥ | 450 | 200 |
| Alkali Treatment (0.1%NaOH+saturated Ca(OH)₂ solution, 168h) | Tensile Strength Retention/% | ≥ | 80-150 | 60 |
| | Elongation at Break/% | ≥ | 450 | 200 |
| Water Absorption/% | | ≤ | 5 | - |

### 3. Water Absorption:

a) measuring weight of the curred coating film, noted as m1(g);
b) soaking the above film in water for 168 h in accordance with GB/T 6682-2008 (issued by General Administration of Quality Supervision, Inspection and Quarantine of the People's Republic of China);
c) removing excessive water with napkins and then measuring weight of the soaked film, noted as m2(g);
d) calculating water absorption, expressed as %.
Water Absorption%= (m2-m1)/m1.

In the examples below, the parts refer to pbw and the amounts of components added as dispersions or emulsions refer to the amounts of the dispersions or emulsions per se.

### Example 1

2.36 parts of wetting and dispersing agent (DISPER BYK-190), 0.22 part of defoaming agent (TEGO® Airex 901 W), 23.69 parts of titanium dioxide (R706), 23.69 parts of barium sulfate (800 mesh), 0.14 part of pH adjusting aid (AMP-95) and 0.55 part of cellulose ether were added to water and stirred under a stirring speed of 2000 r/min for 20 min. 24.72 parts of water-borne polyurethane dispersion (Impranil® DL 1537), 1.97 parts of film-forming aid (propanediol), 0.41 part of defoaming agent (BYK022), 0.55 part of substrate wetting and dispersing agent (BYK349) were added and the remaining was made up with water to 100 parts. The mixture was stirred under a stirring speed of 800 r/min for 10 min. PVC of the formula was 40%.

### Example 2

2.24 parts of wetting and dispersing agent (DISPER BYK-190), 0.21 part of defoaming agent (TEGO® Airex 901 W), 22.45 parts of titanium dioxide (R706), 22.45 parts of barium sulfate (800 mesh), 0.13 part of pH adjusting aid (AMP-95) and 0.52 part of cellulose ether were added to water and stirred under a stirring speed of 2000 r/min for 20 min. 28.63 parts of water-borne polyurethane dispersion (Bayhydrol UH 2880), 1.97 parts of film-forming aid (propanediol), 0.39 part of defoaming agent (BYK022), 0.52 part of substrate wetting and dispersing agent (BYK349) were added and the remaining was made up with water to 100 parts. The mixture was stirred under a stirring speed of 800 r/min for 10 min. PVC of the formula was 40%.

**Table 2 Coating Performance**

| Coating | Standard Condition | | Acid Treatment | | Alkali Treatment | | Water Absorption/% |
|---|---|---|---|---|---|---|---|
| | Tensile Strength/MPa | Elongation at Break/% | Tensile Strength Retention/% | Elongation at Break/% | Tensile Strength Retention/% | Elongation at Break/% | |
| Example 1 | 3.83 | 573 | 62 | 742 | 79 | 403 | 11 |
| Example 2 | 6.05 | 577 | 80 | 473 | 80 | 458 | 7 |

The Bayhydrol UH 2880 used in Example 2 was a water-borne polyether polyurethane dispersion based on aliphatic isocyanate and polyether polyol, while the Impranil® DL 1537 used in Example 1 was a water-borne polyester polyurethane dispersion based on aliphatic isocyanate and polyester polyol. From Table 2, it can be seen that both the coatings of Example 1 and 2 met Architectue Industry Standard JC/T 864-2008, and the coating of Example 2 comprising an emulsion of the water-borne polyether polyurethane dispersion based on aliphatic isocyanate and polyether polyol (Bayhydrol UH 2880) exihibited optimal results in each property, and both its standard tensile strength and elongation at break met the requirements of GB/T 19250-2013.

### Example 3

1.81 parts of wetting and dispersing agent (DISPER BYK-190), 0.17 part of defoaming agent (TEGO® Airex 901 W), 46.27 parts of titanium dioxide (R706), 0.11 part of pH adjusting aid (AMP-95) and 0.17 part of cellulose ether were added to water and stirred under a stirring speed of 2000 r/min for 20 min. 32.6 parts of water-borne polyurethane dispersion (Bayhydrol UH 2880), 1.97 parts of film-forming aid (propanediol), 0.32 part of defoaming agent (BYK022), 0.42 part of substrate wetting and dispersing agent (BYK349) were added and the remaining was made up with water to 100 parts. The mixture was stirred under a stirring speed of 800 r/min for 10 min. PVC of the formula was 40%.

### Example 4

2.22 parts of wetting and dispersing agent (DISPER BYK-190), 0.21 part of defoaming agent (TEGO® Airex 901 W), 45.03 parts of barium sulfate (800 mesh), 0.13 part of pH adjusting aid (AMP-95) and 0.26 part of cellulose ether were added to water and stirred under a stirring speed of 2000 r/min for 20 min. 28.72 parts of water-borne polyurethane dispersion (Bayhydrol UH 2880), 1.97 parts of film-forming aid (propanediol), 0.39 part of defoaming agent (BYK022), 0.52 part of substrate wetting and dispersing agent (BYK349) were added and the remaining was made up with water to 100 parts. The mixture was stirred under a stirring speed of 800 r/min for 10 min. PVC of the formula was 40%.

### Example 5

2.69 parts of wetting and dispersing agent (DISPER BYK-190), 0.25 part of defoaming agent (TEGO® Airex 901 W), 33.28 parts of talc powder (800 mesh), 0.16 part of pH adjusting aid (AMP-95) and 0.32 part of cellulose ether were added to water and stirred under a stirring speed of 2000 r/min for 20 min. 34.86 parts of water-borne polyurethane dispersion (Bayhydrol UH 2880), 1.97 parts of film-forming aid (propanediol), 0.48 part of defoaming agent (BYK022), 0.63 part of substrate wetting and dispersing agent (BYK349) were added and the remaining was made up with water to 100 parts. The mixture was stirred under a stirring speed of 800 r/min for 10 min. PVC of the formula was 40%.

### Example 6

2.69 parts of wetting and dispersing agent (DISPER BYK-190), 0.25 part of defoaming agent (TEGO® Airex 901 W), 33.28 parts of kaolin (800 mesh), 0.16 part of pH adjusting aid (AMP-95) and 0.32 part of cellulose ether were added to water and stirred under a stirring speed of 2000 r/min for 20 min. 34.86 parts of water-borne polyurethane dispersion (Bayhydrol UH 2880), 1.97 parts of film-forming aid (propanediol), 0.48 part of defoaming agent (BYK022), 0.63 part of substrate wetting and dispersing agent (BYK349) were added and the remaining was made up with water to 100 parts. The mixture was stirred under a stirring speed of 800 r/min for 10 min. PVC of the formula was 40%.

### Example 7

2.24 parts of wetting and dispersing agent (DISPER BYK-190), 1.02 parts of defoaming agent (TEGO® Airex 901 W), 22.42 parts of titanium dioxide (R706), 22.42 parts of barium sulfate(1250 mesh), 0.1 part of pH adjusting aid (AMP-95) and 0.51 part of cellulose ether were added to water and stirred under a stirring speed of 2000 r/min for 20 min. 27.49 parts of water-borne polyurethane dispersion Bayhydrol UH 2880, 2.04 parts of film-forming aid (propanediol), 0.31 part of defoaming agent (BYK022), 0.41 part of substrate wetting and dispersing agent (BYK349) were added and the remaining was made up with water to 100 parts. The mixture was stirred under a stirring speed of 800 r/min for 10 min. PVC of the formula was 40%.

### Example 8

2.23 parts of wetting and dispersing agent (DISPER BYK-190), 1.02 parts of defoaming agent (TEGO® Airex 901 W), 22.35 parts of titanium dioxide (R706), 22.35 parts of barium sulfate (4000 mesh), 0.1 part of pH adjusting aid (AMP-95) and 0.1 part of cellulose ether were added to water and stirred under a stirring speed of 2000 r/min for 20 min. 27.41 parts of water-borne polyurethane dispersion (Bayhydrol UH 2880), 2.03 parts of film-forming aid (propanediol), 0.41 part of defoaming agent (BYK022), 0.3 part of substrate wetting and dispersing agent (BYK349) were added and the remaining was made up with water to 100 parts. The mixture was stirred under a stirring speed of 800 r/min for 10 min. PVC of the formula was 40%.

**Table 3 Formula of Coating Composition**

| Coating | Dispersion | Inorganic Particles | PVC |
|---|---|---|---|
| Example 3 | Bayhydrol UH 2880 | titanium dioxide(R706) | 40% |
| Example 4 | Bayhydrol UH 2880 | barium sulfate(800 mesh) | 40% |
| Example 5 | Bayhydrol UH 2880 | talc powder (800 mesh) | 40% |
| Example 6 | Bayhydrol UH 2880 | kaolin (800 mesh) | 40% |
| Example 7 | Bayhydrol UH 2880 | titanium dioxide(R706), barium sulfate(1250 mesh) 1:1 | 40% |
| Example 8 | Bayhydrol UH 2880 | titanium dioxide(R706), barium sulfate(4000 mesh) 1:1 | 40% |

**Table 4 Coating Performance**

| Coating | Standard Condition | | Acid Treatment | | Alkali Treatment | | Water Absorption/% |
|---|---|---|---|---|---|---|---|
| | Tensile Strength/MPa | Elongation at Break/% | Tensile Strength Retention/% | Elongation at Break/% | Tensile Strength Retention/% | Elongation at Break/% | |
| Example 3 | 5.73 | 550 | 85 | 574 | 83 | 468 | 7 |
| Example 4 | 3.41 | 626 | 85 | 565 | 86 | 519 | 7 |
| Example 5 | 4.9 | 594 | 118 | 530 | 61 | 500 | 11 |
| Example 6 | 2.52 | 340 | 82 | 506 | 162 | 479 | 16 |
| Example 7 | 5.13 | 688 | 130 | 541 | 91 | 507 | 9 |
| Example 8 | 5.31 | 742 | 95 | 567 | 101 | 461 | 8 |

From the above table, it can be seen that the coatings of Examples 3-8 all met Architectue Industry Standard JC/T 864-2008. Among them, the formula employing a combination of barium sulfate and titanium dioxide gave superior properties, the tensile strength and elongation at break under standard condition and after acid/alkali treatment both met the requirements of GB/T 19250-2013, wherein the one employing a combination of barium sulfate of 1250 mesh and titanium dioxide R706 exihibited optimal results in overall performance.

### Example 9

2.23 parts of wetting and dispersing agent (DISPER BYK-190), 0.21 part of defoaming agent (TEGO® Airex 901 W), 22.36 parts of titanium dioxide (R706), 22.36 parts of barium sulfate(800 mesh), 0.13 part of pH adjusting aid (AMP-95) and 0.26 part of cellulose ether were added to water and stirred under a stirring speed of 2000 r/min for 20 min. 25.93 parts of water-borne polyurethane dispersion Bayhydrol UH 2880, 2.59 parts of water-borne polyurethane dispersion (Bayhydrol® UH 2606), 1.97 parts of film-forming aid (propanediol), 0.39 part of defoaming agent (BYK022), 0.52 part of substrate wetting and dispersing agent (BYK349) were added and the remaining was made up with water to 100 parts. The mixture was stirred under a stirring speed of 800 r/min for 10 min. PVC of the formula was 40%.

### Example 10

2.26 parts of wetting and dispersing agent (DISPER BYK-190), 0.21 part of defoaming agent (TEGO® Airex 901 W), 22.69 parts of titanium dioxide (R706), 22.69 parts of barium sulfate (800 mesh), 0.13 part of pH adjusting aid (AMP-95) and 0.26 part of cellulose ether were added to water and stirred under a stirring speed of 2000 r/min for 20 min. 24.99 parts of water-borne polyurethane dispersion (Bayhydrol UH 2880), 2.5 parts of water-borne polyurethane dispersion (Impranil® DLU), 1.97 parts of film-forming aid (propanediol), 0.39 part of defoaming agent (BYK022), 0.53 part of substrate wetting and dispersing agent (BYK349) were added and the remaining was made up with water to 100 parts. The mixture was stirred under a stirring speed of 800 r/min for 10 min. PVC of the formula was 40%.

### Example 11

2.20 parts of wetting and dispersing agent (DISPER BYK-190), 0.2 part of defoaming agent (TEGO® Airex 901 W), 22.05 parts of titanium dioxide (R706), 22.05 parts of barium sulfate (800 mesh), 0.13 part of pH adjusting aid (AMP-95) and 0.26 part of cellulose ether were added to water and stirred under a stirring speed of 2000 r/min for 20 min. 26.84 parts of water-borne polyurethane dispersion (Bayhydrol UH 2880), 2.68 parts of water-borne polyurethane dispersion (Bayhydrol UH XP 2592), 1.97 parts of film-forming aid (propanediol), 0.38 part of defoaming agent (BYK022), 0.51 part of substrate wetting and dispersing agent (BYK349) were added and the remaining was made up with water to 100 parts. The mixture was stirred under a stirring speed of 800 r/min for 10 min. PVC of the formula was 40%.

### Example 12

2.23 parts of wetting and dispersing agent (DISPER BYK-190), 0.21 part of defoaming agent (TEGO® Airex 901 W), 22.36 parts of titanium dioxide (R706), 22.36 parts of barium sulfate (800 mesh), 0.13 part of pH adjusting aid (AMP-95) and 0.26 part of cellulose ether were added to water and stirred under a stirring speed of 2000 r/min for 20 min. 25.93 parts of water-borne polyurethane dispersion (Bayhydrol UH 2880), 2.59 parts of acrylic dispersion (Bayhydrol® A 2846 XP), 2.01 parts of film-forming aid (propanediol), 0.39 part of defoaming agent (BYK022), 0.52 part of substrate wetting and dispersing agent (BYK349) were added and the remaining was made up with water to 100 parts. The mixture was stirred under a stirring speed of 800 r/min for 10 min. PVC of the formula was 40%.

### Example 13

2.22 parts of wetting and dispersing agent (DISPER BYK-190), 1.01 parts of defoaming agent (TEGO® Airex 901 W), 22.29 parts of titanium dioxide (R706), 22.29 parts of barium sulfate (800 mesh), 0.13 part of pH adjusting aid (AMP-95) and 0.26 part of cellulose ether were added to water and stirred under a stirring speed of 2000 r/min for 20 min. 26.32 parts of water-borne polyurethane dispersion (Bayhydrol UH 2880), 2.63 parts of acrylic dispersion (RS-9169M), 1.97 parts of film-forming aid (propanediol), 0.3 part of defoaming agent (BYK022), 0.4 part of substrate wetting and dispersing agent (BYK349) were added and the remaining was made up with water to 100 parts. The mixture was stirred under a stirring speed of 800 r/min for 10 min. PVC of the formula was 40%.

**Table 5 Coating Formula**

| Coating | Dispersion/Emulsion | Inorganic Particles | PVC |
|---|---|---|---|
| Example 9 | Bayhydrol UH 2880, Bayhydrol® UH 2606 | titanium dioxide (R706), barium sulfate (800 mesh) | 40% |
| Example 10 | Bayhydrol UH 2880, Impranil® DLU | titanium dioxide (R706), barium sulfate (800 mesh) | 40% |
| Example 11 | Bayhydrol UH 2880, Bayhydrol UH XP 2592 | titanium dioxide (R706), barium sulfate (800 mesh) | 40% |
| Example 12 | Bayhydrol UH 2880, Bayhydrol® A 2846 XP | titanium dioxide (R706), barium sulfate (800 mesh) | 40% |
| Example 13 | Bayhydrol UH 2880, acrylic dispersion RS-9169M | titanium dioxide (R706), barium sulfate (800 mesh) | 40% |

**Table 6 Coating Performance**

| Coating | Standard Condition | | Acid Treatment | | Alkali Treatment | | Water Absorption/% |
|---|---|---|---|---|---|---|---|
| | Tensile Strength/MPa | Elongation at Break/% | Tensile Strength Retention/% | Elongation at Break/% | Tensile Strength Retention/% | Elongation at Break/% | |
| Example 9 | 6.06 | 681 | 58 | 713 | 89 | 542 | 9 |
| Example 10 | 6.4 | 641 | 51 | 413 | 89 | 177 | 9 |
| Example 11 | 2.98 | 494 | 97 | 524 | 83 | 286 | 34 |
| Example 12 | 5 | 554 | 87 | 545 | 96 | 450 | 7 |
| Example 13 | 2.03 | 335 | 68 | 482 | 111 | 475 | 7 |

From the above table, it can be seen that the coatings of Examples 9-13 all met Architectue Industry Standard JC/T 864-2008. Among them, the composition employing a polyether polyurethane resin based on aliphatic isocyanate and polyether polyol (Bayhydrol UH 2880) and a self-crosslinkable hydroxyl-containing acrylic resin (Bayhydrol® A 2846 XP) exihibited optimal results in overall performance, the tensile strength and elongation at break under standard condition and after acid/alkali treatment both met the requirements of GB/T 19250-2013.

### Example 14

2.23 parts of wetting and dispersing agent (DISPER BYK-190), 0.21 part of defoaming agent (TEGO® Airex 901 W), 22.39 parts of titanium dioxide (R706), 22.39 parts of barium sulfate (800 mesh), 0.13 part of pH adjusting aid (AMP-95) and 0.2 part of cellulose ether were added to water and stirred under a stirring speed of 2000 r/min for 20 min. 28.55 parts of water-borne polyurethane dispersion (Bayhydrol UH 2880), 2.6 parts of film-forming aid (propanediol), 0.39 part of defoaming agent (BYK022), 0.52 part of substrate wetting and dispersing agent (BYK349), 0.3 part of surfactant (BYK378) were added and the remaining was made up with water to 100 parts. The mixture was stirred under a stirring speed of 800 r/min for 10 min. PVC of the formula was 40%.

### Example 15

2.23 parts of wetting and dispersing agent (DISPER BYK-190), 0.21 part of defoaming agent (TEGO® Airex 901 W), 22.39 parts of titanium dioxide (R706), 22.39 parts of barium sulfate (800 mesh), 0.13 part of pH adjusting aid (AMP-95) and 0.52 part of cellulose ether were added to water and stirred under a stirring speed of 2000 r/min for 20 min. 28.55 parts of water-borne polyurethane dispersion (Bayhydrol UH 2880), 2.6 parts of film-forming aid (propanediol), 0.39 part of defoaming agent (BYK022), 0.52 part of substrate wetting and dispersing agent (BYK349), 0.3 part of surfactant BYK3720 were added and the remaining was made up with water to 100 parts. The mixture was stirred under a stirring speed of 800 r/min for 10 min. PVC of the formula was 40%.

### Example 16

2.22 parts of wetting and dispersing agent (DISPER BYK-190), 0.21 part of defoaming agent (TEGO® Airex 901 W), 22.30 parts of titanium dioxide (R706), 22.30 parts of barium sulfate (800 mesh), 0.13 part of pH adjusting aid (AMP-95) and 0.26 part of cellulose ether were added to water and stirred under a stirring speed of 2000 r/min for 20 min. 25.85 parts of water-borne polyurethane dispersion (Bayhydrol UH 2880), 2.59 parts of acrylic dispersion (Bayhydrol® A 2846 XP), 2.59 parts of film-forming aid (propanediol), 0.39 part of defoaming agent (BYK022), 0.52 part of substrate wetting and dispersing agent (BYK349), 0.3 part of surfactant (BYK378) were added and the remaining was made up with water to 100 parts. The mixture was stirred under a stirring speed of 800 r/min for 10 min. PVC of the formula was 40%.

### Example 17

2.22 parts of wetting and dispersing agent (DISPER BYK-190), 0.21 part of defoaming agent (TEGO® Airex 901 W), 22.30 parts of titanium dioxide (R706), 22.30 parts of barium sulfate (800 mesh), 0.13 part of pH adjusting aid (AMP-95) and 0.26 part of cellulose ether were added to water and stirred under a stirring speed of 2000 r/min for 20 min. 25.85 parts of water-borne polyurethane dispersion (Bayhydrol UH 2880), 2.59 parts of acrylic dispersion (Bayhydrol® A 2846 XP), 2.59 parts of film-forming aid (propanediol), 0.39 part of defoaming agent (BYK022), 0.52 part of substrate wetting and dispersing agent (BYK349), 0.3 part of surfactant (BYK3720) were added and the remaining was made up with water to 100 parts. The mixture was stirred under a stirring speed of 800 r/min for 10 min. PVC of the formula was 40%.

**Table 7 Coating Formula**

| Coating | Dispersion/Emulsion | Inorganic Particles | PVC | Surfactant |
|---|---|---|---|---|
| Example 14 | Bayhydrol UH 2880 | titanium dioxide(R706), barium sulfate(800 mesh) | 40% | BYK378 |
| Example 15 | Bayhydrol UH 2880 | titanium dioxide(R706), barium sulfate(800 mesh) | 40% | BYK3720 |
| Example 16 | Bayhydrol UH 2880, Bayhydrol® A 2846 XP | titanium dioxide(R706), barium sulfate(800 mesh) | 40% | BYK378 |
| Example 17 | Bayhydrol UH 2880, Bayhydrol® A 2846 XP | titanium dioxide(R706), barium sulfate(800 mesh) | 40% | BYK3720 |

**Table 8 Coating Performance**

| Coating | Dispersion/Emulsion | Surfactant | Water Absorption/% |
|---|---|---|---|
| Example 14 | Bayhydrol UH 2880 | BYK378 | 3 |
| Example 15 | Bayhydrol UH 2880 | BYK3720 | 5 |
| Example 16 | Bayhydrol UH 2880, Bayhydrol® A 2846 XP | BYK378 | 4 |
| Example 17 | Bayhydrol UH 2880, Bayhydrol® A 2846 XP | BYK3720 | 4 |

The tensile strength and elongation at break of the resultant coatings of Examples 14-15 under standard condition, after acid treatment or alkali treatment were very close to those of Example 2, while the tensile strength and elongation at break of the resultant coatings of Examples 16-17 under standard condition, after acid treatment and alkali treatment were very close to those of Example 12.

From the above table, it can be seen that water absorption can be reduced by employing either a non-self-crosslinkable polyether-modified polydimethylsiloxane (BYK378) or a solution of self-crosslinkable polyether-modified polydimethylsiloxane containing hydroxyl groups (BYK3720). It was observed that the coatings obtained in Example 14 and 16 were superior in storage stability, therefore the non-self-crosslinkable polyether-modified polydimethylsiloxane (BYK378) was preferably selected to reduce water absorption.

### Example 18

2.08 parts of wetting and dispersing agent (DISPER BYK-190), 0.19 part of defoaming agent (TEGO® Airex 901 W), 20.83 parts of titanium dioxide (R706), 20.83 parts of barium sulfate (800 mesh), 0.12 part of pH adjusting aid (AMP-95) and 0.48 part of cellulose ether were added to water and stirred under a stirring speed of 2000 r/min for 20 min. 33.8 parts of water-borne polyurethane dispersion (Bayhydrol UH 2880), 1.97 parts of film-forming aid (propanediol), 0.36 part of defoaming agent (BYK022), 0.48 part of substrate wetting and dispersing agent (BYK349) were added and the remaining was made up with water to 100 parts. The mixture was stirred under a stirring speed of 800 r/min for 10 min. PVC of the formula was 35%.

**Table 9 Coating Formula**

| Coating | Dispersion | Inorganic Particles | PVC |
|---|---|---|---|
| Example 18 | Bayhydrol UH 2880 | titanium dioxide(R706), barium sulfate(800 mesh) | 35% |

**Table 10 Coating Performance**

| Coating | Standard Condition | | Acid Treatment | | Alkali Treatment | | Water Absorption/% |
|---|---|---|---|---|---|---|---|
| | Tensile Strength/ MPa | Elongation at Break/% | Tensile Strength Retention/% | Elongation at Break/% | Tensile Strength Retention/% | Elongation at Break/% | |
| Example 18 | 9.05 | 681 | 63 | 713 | 82 | 542 | 10 |

### Example 19

2.22 parts of wetting and dispersing agent (DISPER BYK-190), 1.01 parts of defoaming agent (TEGO® Airex 901 W), 22.22 parts of titanium dioxide (R706), 22.22 parts of barium sulfate (800 mesh), 0.13 part of pH adjusting aid (AMP-95) and 0.26 part of cellulose ether were added to water and stirred under a stirring speed of 2000 r/min for 20 min. 26.24 parts of water-borne polyurethane dispersion (Bayhydrol UH 2880), 2.92 parts of acrylic dispersion (RS-9169M), 1.97 parts of film-forming aid (propanediol), 0.3 part of defoaming agent (BYK022), 0.4 part of substrate wetting and dispersing agent (BYK349) were added and the remaining was made up with water to 100 parts. The mixture was stirred under a stirring speed of 800 r/min for 10 min. PVC of the formula was 40%.

### Example 20

2.22 parts of wetting and dispersing agent (DISPER BYK-190), 1.01 parts of defoaming agent (TEGO® Airex 901 W), 22.25 parts of titanium dioxide (R706), 22.25 parts of barium sulfate (800 mesh), 0.13 part of pH adjusting aid (AMP-95) and 0.26 part of cellulose ether were added to water and stirred under a stirring speed of 2000 r/min for 20 min. 23.25 parts of water-borne polyurethane dispersion (Bayhydrol UH 2880), 5.81 parts of acrylic dispersion (RS-9169M), 1.97 parts of film-forming aid (propanediol), 0.3 part of defoaming agent (BYK022), 0.4 part of substrate wetting and dispersing agent (BYK349) were added and the remaining was made up with water to 100 parts. The mixture was stirred under a stirring speed of 800 r/min for 10 min. PVC of the formula was 40%.

### Example 21

2.24 parts of wetting and dispersing agent (DISPER BYK-190), 1.02 parts of defoaming agent (TEGO® Airex 901 W), 22.48 parts of titanium dioxide (R706), 22.48 parts of barium sulfate (800 mesh), 0.13 part of pH adjusting aid (AMP-95) and 0.26 part of cellulose ether were added to water and stirred under a stirring speed of 2000 r/min for 20 min. 19.87 parts of water-borne polyurethane dispersion (Bayhydrol UH 2880), 8.52 parts of acrylic dispersion (RS-9169M), 1.97 parts of film-forming aid (propanediol), 0.31 part of defoaming agent (BYK022), 0.41 part of substrate wetting and dispersing agent (BYK349) were added and the remaining was made up with water to 100 parts. The mixture was stirred under a stirring speed of 800 r/min for 10 min. PVC of the formula was 40%.

### Comparative Example 1

2.31 parts of wetting and dispersing agent (DISPER BYK-190), 1.05 parts of defoaming agent (TEGO® Airex 901 W), 23.13 parts of titanium dioxide (R706), 23.13 parts of barium sulfate (800 mesh), 0.13 part of pH adjusting aid (AMP-95) and 0.26 part of cellulose ether were added to water and stirred under a stirring speed of 2000 r/min for 20 min. 26.26 parts of acrylic dispersion (RS-9169M), 1.97 parts of film-forming aid propanediol, 0.32 part of defoaming agent (BYK022), 0.42 part of substrate wetting and dispersing agent (BYK349) were added and the remaining was made up with water to 100 parts. The mixture was stirred under a stirring speed of 800 r/min for 10 min. PVC of the formula was 40%.

**Table 11 Comparison of Mechanical Property**

| Coating | Standard Condition | | Acid Treatment | | Alkali Treatment | | Water Absorption/% |
|---|---|---|---|---|---|---|---|
| | Tensile Strength/MPa | Elongation at Break/% | Tensile Strength Retention/% | Elongation at Break/% | Tensile Strength Retention/% | Elongation at Break/% | |
| Example 19 | 2.08 | 359 | 67 | 516 | 132 | 357 | 7 |
| Example 20 | 1.85 | 361 | 45 | 416 | 119 | 463 | 8 |
| Example 21 | 2.03 | 358 | 65 | 313 | 102 | 324 | 8 |
| Comparative Example 1 | 0.98 | 369 | 92 | 379 | 123 | 341 | 10 |

### Example 22

2.10 parts of wetting and dispersing agent (DISPER BYK-190), 1.22 parts of defoaming agent (TEGO® Airex 901 W), 21.09 parts of titanium dioxide (R706), 21.09 parts of barium sulfate (800 mesh), 0.13 part of pH adjusting aid (AMP-95) and 0.26 part of cellulose ether were added to water and stirred under a stirring speed of 2000 r/min for 20 min. 25.67 parts of water-borne polyurethane dispersion (Bayhydrol UH 2880), 2.85 parts of acrylic dispersion (Bayhydrol® A 2846 XP), 2.44 parts of film-forming aid (propanediol), 0.49 part of defoaming agent (BYK022), 0.61 part of substrate wetting and dispersing agent (BYK349) were added and the remaining was made up with water to 100 parts. The mixture was stirred under a stirring speed of 800 r/min for 10 min. PVC of the formula was 40%.

### Example 23

2.09 parts of wetting and dispersing agent (DISPER BYK-190), 1.22 parts of defoaming agent (TEGO® Airex 901 W), 20.98 parts of titanium dioxide (R706), 20.98 parts of barium sulfate (800 mesh), 0.13 part of pH adjusting aid (AMP-95) and 0.26 part of cellulose ether were added to water and stirred under a stirring speed of 2000 r/min for 20 min. 23.11 parts of water-borne polyurethane dispersion (Bayhydrol UH 2880), 5.78 parts of acrylic dispersion (Bayhydrol® A 2846 XP), 2.43 parts of film-forming aidgent (propanediol), 0.49 part of defoaming agent (BYK022), 0.61 part of substrate wetting and dispersing agent (BYK349) were added and the remaining was made up with water to 100 parts. The mixture was stirred under a stirring speed of 800 r/min for 10 min. PVC of the formula was 40%.

### Example 24

2.08 parts of wetting and dispersing agent (DISPER BYK-190), 1.21 parts of defoaming agent (TEGO® Airex 901 W), 20.84 parts of titanium dioxide (R706), 20.84 parts of barium sulfate (800 mesh), 0.13 part of pH adjusting aid (AMP-95) and 0.26 part of cellulose ether were added to water and stirred under a stirring speed of 2000 r/min for 20 min. 20.54 parts of water-borne polyurethane dispersion (Bayhydrol UH 2880), 8.81 parts of acrylic dispersion (Bayhydrol® A 2846 XP), 2.42 parts of film-forming aid (propanediol), 0.48 part of defoaming agent (BYK022), 0.60 part of substrate wetting and dispersing agent (BYK349) were added and the remaining was made up with water to 100 parts. The mixture was stirred under a stirring speed of 800 r/min for 10 min. PVC of the formula was 40%.

### Comparative Example 2

2.10 parts of wetting and dispersing agent (DISPER BYK-190), 0.96 part of defoaming agent (TEGO® Airex 901 W), 21.05 parts of titanium dioxide (R706), 21.05 parts of barium sulfate (800 mesh), 0.13 part of pH adjusting aid (AMP-95) and 0.26 part of cellulose ether were added to water and stirred under a stirring speed of 2000 r/min for 20 min. 31.55 parts of acrylic dispersion (Bayhydrol® A 2846 XP), 1.91 parts of film-forming aid (propanediol), 0.38 part of defoaming agent (BYK022), 0.38 part of substrate wetting and dispersing agent (BYK349) were added and the remaining was made up with water to 100 parts. The mixture was stirred under a stirring speed of 800 r/min for 10 min. PVC of the formula was 40%.

**Table 12 Comparison of Mechanical Property**

| Coating | Standard Condition | | Acid Treatment | | Alkali Treatment | | Water Absorption/% |
|---|---|---|---|---|---|---|---|
| | Tensile Strength/MPa | Elongation at Break/% | Tensile Strength Retention/% | Elongation at Break/% | Tensile Strength Retention/% | Elongation at Break/% | |
| Example 22 | 3.91 | 620 | 94 | 455 | 82 | 541 | 7 |
| Example 23 | 2.97 | 486 | 75 | 421 | 75 | 421 | 8 |
| Example 24 | 2.32 | 416 | 62 | 225 | 122 | 303 | 8 |
| Comparative Example 2 | Fail to form film | | - | - | - | - | - |

From the above table, it can be seen that, when the ratio by weight between the solids content of Bayhydrol UH 2880 and that of Bayhydrol® A 2846 XP is greater than 2: 1, especially no smaller than 9: 1, the composition exihibited optimal results in overall performance.

### Example 25

Example 25 was performed following the procedure of Example 16, except that 0.6 part of surfactant BYK378 was used.

### Example 26

Example 26 was performed following the procedure of Example 16, except that 0.9 part of surfactant BYK378 was used.

### Example 27

Example 27 was performed following the procedure of Example 17, except that 0.6 part of surfactant BYK3720 was used.

### Example 28

Example 28 was performed following the procedure of Example 17, except that 0.9 part of surfactant BYK3720 was used.

**Table 13 Water Absorption and Change in Appearance after Surfactant Addition**

| | Example 25 | Example 26 | Example 27 | Example 28 |
|---|---|---|---|---|
| Water Absorption/% | 5 | 8 | 5 | 8 |
| Film Appearance | no shrinkage | slight shrinkage | no shrinkage | slight shrinkage |

The tensile strength and elongation at break of the resultant coatings of Examples 25-28 under standard condition, after acid treatment or alkali treatment were very close to those of Examples 16-17.

Although some aspects of the present invention has been exihibited and discussed, it is to be realized by those skilled in the art that various modifications may be made to the above aspects without departing from the principle and spirit of the present invention and thus the scope of the present invention will be defined by the Claims and equivalents thereof.

## Claims

1. A one-component water-borne polyurethane coating composition, **characterized in that**, the coating composition comprises a water-borne polyurethane resin, inorganic particles, an optional acrylate resin and an optional adjuvant, wherein the solids content of the water-borne polyurethane resin is 10-30 pbw, based on that the total amount of the coating composition being 100 pbw.

2. The coating composition according to Claim 1, **characterized in that**, the water-borne polyurethane resin is one or more selected from: polyether polyurethane resin based on aliphatic isocyanate and polyether polyol, polycarbonate polyurethane resin based on aliphatic isocyanate and polycarbonate polyol, and polyester polyurethane resin or a mixture of at least two thereof.

3. The coating composition according to Claim 1 or 2, **characterized in that**, the acrylate resin is one or more selected from: styrene-acrylate copolymer resin and self-crosslinkable hydroxyl-containing acrylic resin or a mixture of at least two thereof.

4. The coating composition according to Claim 1, **characterized in that**, the coating composition comprises a water-borne polyurethane resin selected from polyether polyurethane resin based on aliphatic isocyanate and polyether polyol, and an acrylate resin selected from self-crosslinkable hydroxyl-containing acrylic resin or a mixture thereof.

5. The coating composition according to any one of Claims 1 to 4, **characterized in that**, the inorganic particles are one or more selected from: titanium dioxide, barium sulfate, talc powder and kaolin particles or a mixture of at least two thereof.

6. The coating composition according to Claim 5, **characterized in that**, the titanium dioxide particles have an average particle diameter of 0.1-0.4 µm, and the barium sulfate particles have an average particle diameter of 800-4000 mesh, preferably of 1250-4000 mesh.

7. The coating composition according to any one of Claims 1 to 6, **characterized in that**, the adjuvant includes surfactant, which is selected from polysiloxane surfactants, preferably selected from non-self-crosslinkable polysiloxane surfactants.

8. The coating composition according to any one of Claims 1 to 7, **characterized in that**, the surfactant is selected from polyether-modified polydimethylsiloxanes, preferably selected from non-self-crosslinkable polyether-modified polydimethylsiloxanes.

9. The coating composition according to any one of Claims 1 to 8, **characterized in that**, the ratio by weight between the solids content of the water-borne polyurethane resin and the solids content of the acrylate resin is greater than 2: 1, preferably no less than 5: 1, more preferably no less than 9: 1.

10. The coating composition according to any one of Claims 1 to 9, **characterized in that**, the amount of the inorganic particles is 1-80 pbw, preferably 20-60 pbw, more preferably 30-50 pbw, based on that the total amount of the coating composition being 100 pbw.

11. The coating composition according to any one of Claims 1 to 10, **characterized in that**, the volume of the inorganic particles presents 20-60%, preferably 30-50%, most preferably 35-45%, particularly preferably 40% of the total volume of the coating formed by the coating composition.

12. A method for preparing the coating composition according to any one of Claims 1 to 11 comprising the following steps:
A) mixing inorganic particles and an optional adjuvant in water homogeneously, and
B) adding a water-borne polyurethane resin, an optional acrylate resin and an optional adjuvant to the mixture obtained in step A) and mixing homogeneously.

13. A coating method comprising applying the coating composition according to any one of Claims 1 to 11 to a substrate.

14. Use of the coating composition according to any one of Claims 1 to 11 for forming a coating in the field of building waterproofing, such as roof waterproofing, kitchen and bathroom waterproofing and swimming pool waterproofing.

15. A coated product comprising a substrate and a coating formed by applying the coating composition according to any one of Claims 1 to 11 onto the substrate.
